# EUROPEAN PATENT SPECIFICATION

(11) **EP 1 093 481 B1**
(45) Date of publication and mention of the grant of the patent: **25.08.2004**
(21) Application number: 99929970.4
(22) Date of filing: 30.06.1999
(51) Int. Cl.: C08F 290/00, C08F 20/36

(54) **RADIATION-CURABLE POLYMER AND A COMPOSITION COMPRISING THIS POLYMER**
STRAHLUNGSHÄRTBARES POLYMER UND DIESES ENTHALTENDE ZUSAMMENZETZUNG
POLYMERE DURCISSABLE PAR RADIATION ET COMPOSITION LE COMPRENANT

(30) Priority: 06.07.1998 EP 98202236
(43) Date of publication of application: 25.04.2001
(73) Proprietor: DSM IP Assets B.V., 6411 TE Heerlen (NL)
(72) Inventor: VAN BENTHEM, Rudolfus, Antonius, Theodorus, Maria, NL-6141 BR Sittard (NL); JANSEN, Johan, Franz, Gradus, Antonius, NL-6165 AP Geleen (NL); DIAS, Aylvin, Jorge, Angelo, Athanasius, NL-6221 JD Maastricht (NL)
(74) Representative: van Tol-Koutstaal, Charlotte Adeliene
(86) International application number: PCT/NL1999/000406
(87) International publication number: WO 2000/001749

(56) References cited:
- EP-A- 0 132 032
- EP-A- 0 326 132
- WO-A-98/01419
- DE-A- 2 217 158
- DE-A- 2 239 937
- US-A- 3 366 613

## Description

The invention relates to a radiation-curable polymer and a composition comprising this polymer.

During radiation curing processes the transformation of the fluid applied film to a solid crosslinked network can be considered to progress through three distinct stages being induction, polymerisation and attainment of maximum cure plateau. (Chemistry and Technology of UV and EB formulations, Volume IV, Oldring, 1991, pages 8-12).

Factors which improve or inhibit cure rate are, for example, the lamp system (UV-dose, intensity, wavelength, IR-content) and the chemical system (reactivity, absorption, coating weight, pigmentation, temperature, oxygen inhibition and substrate).

For commercial coating operations, it is necessary that the coating achieves a tackfree surface within seconds or less, because the interval between application of the coating and stacking or rewinding of the coated substrate is very short. Failure of the coating to achieve a non-tacky surface in this brief interval will result in the layers of coated substrate (in a stack or roll) sticking together ("blocking).

It is the object of the present invention to provide a coating composition having a high cure rate or rate of polymerisation and yielding a coating having the desired chemical and mechanical properies.

The radiation curable composition according to the invention contains a polymer having at least one group derived from a carboxylic ester of a hydroxyalkylamide with an α,β-ethylenically unsaturated carboxylic acid wherein the polymer is a functionalized polymer according to formula (I): 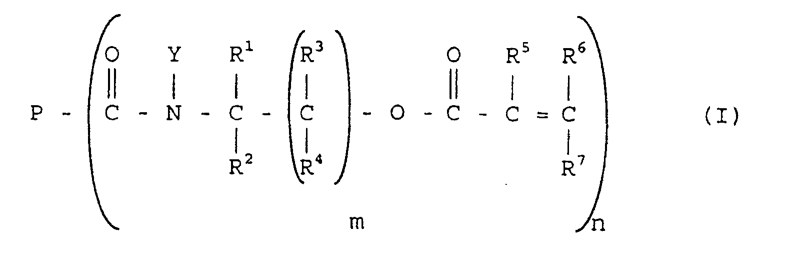 where:
- P =: a polymer group,
- Y =: hydrogen, an (C₁-C₈) alkyl group or a group of the formula 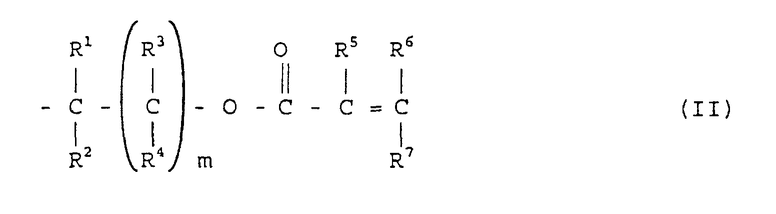
R¹, R², R³, R⁴ are, identical or different,
hydrogen or a linear, branched or cyclic (C₁-C₈) alkyl chain,
- R⁵ =: hydrogen, (C₁-C₅)alkyl, -CH₂OH or CH₂COOX,
- R⁶, R⁷ =: hydrogen, (C₁-C₈) alkyl, or COOX
- X =: hydrogen or (C₁-C₈) alkyl,
- n =: 1-100 and
- m =: 1-4.

The composition according to the invention results in high maximum polymerization rates.

In the formula R¹, R² or R³ may form part of a cycloalkyl group.

Preferably, Y is hydrogen or methyl.

More preferably, y is hydrogen

Preferably, R¹, R², R³ and R⁴ are hydrogen or methyl.

More preferably R¹, R² and R³ are hydrogen.

R⁵ is preferably hydrogen or (m)ethyl.

R⁶ and R⁷ are preferably hydrogen.

Preferably n = 2-20.

Preferably m = 1-2, more preferably m = 1.

Suitable hydroxylamides are for example β-hydroxyalkylamide, γ-hydroxyalkylamide, δ-hydroxyalkylamide and ε-hydroxyalkylamide.

Preferably, the hydroxylamide is β-hydroxyalkylamide.

Suitable polymers P are, for example, addition polymers and condensation polymers having a molecular weight (Mw) of at least 400.

These polymers can be, for example, linear polymers, branched polymers, comb polymers, star polymers, ladder polymers, dendrimers and hyperbranched polymers.

Suitable addition polymers P include polymers derived from monomers such as for example (meth)acrylate, acrylamide, styrene, ethylene, propylene, maleic acid, cyanoacrylate, vinylacetate, vinylether, vinylchloride, vinylsilane and mixtures thereof.

Suitable condensation polymers P include, for example, polyesters, polylactones, polyamides, polyesteramides, polyethers, polyesterethers, polyurethanes and polyurethane-urea.

Suitable linear polymers P include, for example, polyethers derived from diols, polyethylene, poly-MMA, polyesters derived from diols and difunctional acids and/or mono-hydroxy acids.

Suitable branched polymers P include, for example, polyethers comprising at least one trifunctional alcohol unit, polyesters comprising at least one tri- or tetrafunctional alcohol unit and/or one tri/tetra-functional acid unit.

Suitable dendrimers are disclosed in for example EP-A-575596, EP-A-707611, EP-A-741756, EP-A-672703, Angew. Chem. Int. Ed. Eng. 1994, 33, 2413, Angew. Chem. Int Ed. Eng. 1990, 29, 138, Angew. Chem. Int. Ed. Eng. 1993, 32, 1308 and Angew. Chem. Int. Ed. Eng. 1992, 31, 1200.

Suitable hyperbranched polymers include, for example, condensation polymers containing β-hydroxyalkylamide groups and having a weight average molecular mass of ≥ 800 g/mol. The polymers can comprise at least two groups according to formula (II): 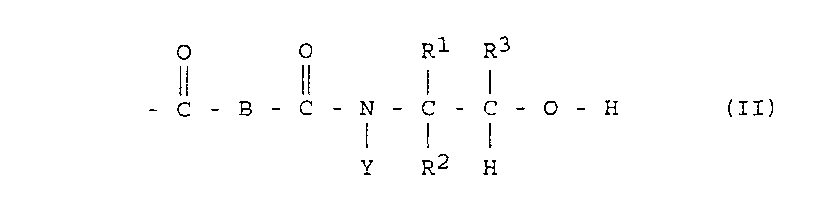 in which 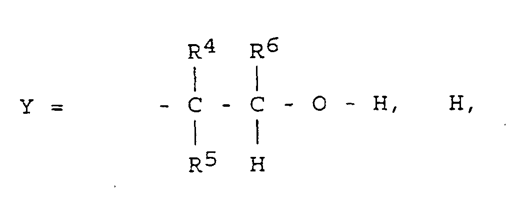 (C₁-C₂₀)(cyclo)alkyl or (C₆-C₁₀) aryl,
B = (C₂-C₂₀), optionally substituted, aryl or (cyclo)alkyl aliphatic diradical, and
R¹, R², R³, R⁴, R⁵ and R⁶ may, independently of one another, be the same or different, H, (C₆-C₁₀) aryl or (C₁-C₈)(cyclo)alkyl radical.

Other examples of suitable hyperbranched polymers are disclosed in WO-A-9612754, WO-A-9613558, WO-A-9619537 and WO-A-9317060.

Between P and the functional group a connecting group S can be present:

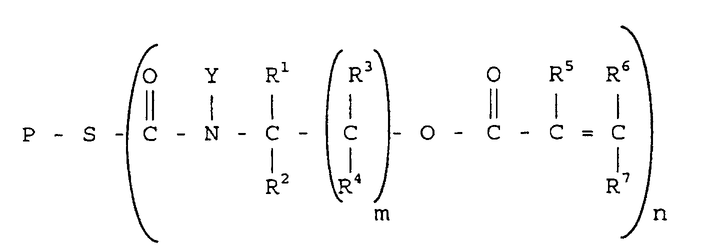

A suitable group S includes, for example, an alkyl, oxyalkyl, urethanealkyl, ureaalkyl carboxyalkyl, aminoalkyl or amidoalkyl group.

The functionalised polymer according to formula (I) can be obtained, for instance, by an esterification reaction between a hydroxyalkylamide units containing polymer and an unsaturated carboxylic acid, at a temperature between, for example, 80°C and 140°C.

The hydroxyalkylamide unit can be in the chain, in a side-chain or at the end of the polymer.

Preferably, 1 - 1.5 mol of acid are used per mole of hydroxide.

Preferably, the reaction takes place in the presence of an organic solvent, such as, for example, xylene, toluene or tetrahydrofuran.

Preferably, the reaction takes place in the presence of a stabilizing compound which prevents polymerization of the unsaturated ester groups under the conditions used for effecting this reaction. The stabilising compound or a mixture of stabilising compounds is generally used in amounts between 50 and 2000 ppm and preferably between 75 and 1000 ppm. They can be used in aerobic or anaerobic conditions depending on the stabilising compound.

Suitable stabilizing compounds include, for example, hydroquinone, monomethylhydroquinone, anthraquinone, β-nitrostyrene, phenothiazine and 2,6-di-tert-butyl-4-methyl-phenol (BHT).

The esterification reaction may take place in the presence of a catalyst. Suitable catalysts include strong acids, for example, sulphur-containing organic acids like alkane sulphonic acids and methane sulphonic acid.

Suitable unsaturated carboxylic acids include, for example, (meth)acrylic acid and derivatives, crotonic acid, (semi-ester of) itaconic acid, maleic acid, citraconic acid, mesaconic acid and fumaric acid. Preferably (meth)acrylic acid is applied.

The functionalised polymer can also be obtained by the reaction between a hydroxyalkyl amide and an unsaturated carboxylic acid chloride, anhydride or ester or a reaction between an oxazoline containing polymer and an unsaturated carboxylic acid.

The reaction between the amide and the unsaturated chloride or anhydride preferably takes place at temperature between 0°C and 30°C in a solvent in the presence of a base. Suitable solvents include, for example, tetrahydrofuran, water, dichloromethane or diethylether. Suitable bases include, for example, pyridine or triethylamine.

Suitable chlorides, anhydrides or esters include the chlorides, anhydrides and esters of the in the foregoing mentioned carboxylic acid.

The reaction between the amide and the unsaturated ester, preferably, takes place at temperatures between 80°C and 140°C in the presence of a Lewis acid.

Preferably, an excess of the unsaturated ester is applied. The ester functions both as solvent and as reactant.

Suitable Lewis acids are, for example, tetra alkyl titanate and sulphuric acid.

Suitable unsaturated carboxylic acids include, for example, (meth)acrylic acid and derivatives, crotonic acid, (semi-ester of) itaconic acid, maleic acid, citraconic acid, mesaconic acid and fumaric acid. Preferably, methacrylic acid and acrylic acid are used.

The functionalised polymer can be cured by means of a free-radical reaction. In these reactions the free radicals can be obtained by irradiation of the functionalised polymer in the presence of a photoinitiator.

Radiation-curing preferably takes place by means of, for example, a photochemical process such as, for example, ultraviolet radiation (UV) or a radiation-chemical process such as electron beam (EB).

UV and EB radiation are explained in greater detail by for example Belt et al. in the article entitled "UV and EB curing" (Jocca 1990 (11), pages 446 - 453).

The amount of the functionalized polymer according to the invention can range between 0,01% by weight and 100% by weight of the composition according to the invention.

Generally, the radiation curable composition according to the invention is substantially solvent free.

If desired and depending on the application, the functionalised polymer can be combined with oligomers or monomers which are based, for example, on (meth)acrylate units, maleate units, fumarate units, itaconate units, vinylester units and/or vinylether units.

After curing the coatings according to the invention have many desired properties such as for example good chemical properties (resistance to solvents, acids, alkalis and moisture), good optical properties and appearance, good mechanical properties (such as hardness, flexibility, adhesion, abrasion resistance, strength and durability), good thermal stability and good weatherability.

The composition comprising the radiation curable binder composition may further comprise pigments, stabilisers and other additives.

A radiation curable formulation generally consists of a prepolymer, a reactive diluent and additives. Two other possible components, depending upon the type of formulation and cure mechanism are pigments and photoinitiator system.

The composition can for example be applied in a water based coating composition, in a solvent based coating composition, in a high solids coating composition, in a 100% solids coating and in a powder paint composition.

The most preferred irradiation source is ultraviolet light. Ultraviolet light is preferably high intensity light to provide a dosage to achieve reasonable curing rates. In the event that lower energy light is to be applied, it may then be desired to subject the compositions also to elevated temperatures in order to reduce the time for adequate polymerization to occur.

With respect to UV curing equipment we refer to, for example, pages 161-234 of Chemistry and Technology of UV and EB-formulations, Volume 1, Oldring, 1991.

Suitable lamps employed to provide the desired high intensity and availability of wavelength and spectral distribution include for example that available from Fusion Systems, Corp.

A composition according to the present invention can be applied on substrates such as, for example, plastic, paper, board, leather, glass, wood and metal.

This composition is preferably polymerised in the presence of a photoinitiator but it is also possible to polymerise in the absence of a photoinitiator.

Suitable photoinitiators allow for initiation of the curing process with exposure to light having wavelengths between 200 nm and 600 nm. Suitable photoinitiators have ketone functionalities and can be aromatic such as, for example, benzophenone. Darocur 1173® (Ciba) is a suitable benzyl-ketal-based photoinitiator, which contains 2-hydroxy-2-methyl-1-phenylpropane-1-one as an active component. Irgacure 184® (Ciba) is an aryl ketone containing hydroxycyclohexyl phenyl ketone as active component, and is a suitable photoinitiator. Irgacure 369® (active component 2-benzyl-2-dimethylaminol-1-(4-morpholinophenyl)-butanone-1) is also suitable. Acyl phosphines, such as for example 2,4,6,-trimethylbenzoyl diphenyl phosphone oxide (Lucerine TPO®, BASF) can also be used, as can Quantacure CPTX® (Octel Chemicals), which contains 1-chloro-4-propoxy thioxanthone as active component. Chemical derivatives of these photoinitiators are suitable, as are mixtures of these photoinitiators. A suitable combination of photoinitiators is Irgacure 1800™ (Ciba) consisting of 75% by weight Irgacure 184™ and 25% by weight (bis-(2,6-dimethoxy benzoyl) -2, 4, 4-trimethylpentyl phosphine oxide). Other suitable photoinitiators can be of the Norrish-II-type, for example, the combinations benzophenone with amine, maleimide with amine, thioxantone with amine and antrachinon with amine.

The invention is explained by reference to the following examples.

### Example I

### Synthesis of resin I

A reaction mixture consisting of 20.1 gram of hydroxy ethyl methacryl amide, 40.3 gram of 2-ethylhexyl acrylate, 40.0 gram of isodecyl acrylate and 6.2 gram of tert-butylperoxy-2-ethylhexanoate was slowly added during 2.5 hours to 140 grams of heated butanone in a roundbottom flask equipped with stirrer, reflux condenser, thermometer and nitrogen inlet, at reflux. Subsequently a solution of 2.6 gram tert-butylperoxy-2-ethylhexanoate in 29.1 gram butanone was added over a period of 1 hour. Charcoal was added to the hot polymer solution and the solution was filtered over Celite® 521. After evaporation of the solvent an hydroxy amid functional polymer with an hydroxy value of 30 meq KOH per gram was obtained. 10,4 grams of acryloylchloride were slowly added to a stirred solution of 100 grams of the hydroxy amid functional polymer prepared above and 12,4 grams of pyridine in 200 ml of dry tetrahydrofurane at 0-5°C. The temperature was maintained below 5°C. After the addition the temperature was slowly raised to room temperature and the reaction mixture was stirred at this temperature for 18 hours.

The reaction mixture was filtered to remove the pyridine-HCl salt, washed with a saturated sodium carbonate solution, washed with water, dried over sodium sulphate and subsequently the solvent was evaporated to yield an acrylic functional resin (resin I)

### Example II

### Synthesis of resin II

390 g molten hexahydro phtalic anhydride (60°C) were added to 455 g molten diisopropyl amine in a 1.5 l reaction flask under nitrogen at 70°C. After the addition, which was followed by an exotherm reaction, the reaction temperature was raised to 180°C and the reaction mixture was stirred at 180°C for 3 hours. Subsequently the pressure was reduced from atmospheric to 20 mbar and the reaction was continued for one additional hour after which a hyperbranched polymer containing β-hydroxyamid endgroups with the following properties was obtained: Mn= 1160, dispersity D= 2.1, Tg= 57.5°C and a hydroxy value of 365 meq KOH per gram.
To this resin 446 g methacrylic acid and 0.4 g phenothiazine were added. Dry air was bubbled through the reaction mixture after which the reaction mixture was heated to 110°C for 6 hours. Subsequently the pressure was reduced to 20 mbar and a small amount of methacrylic acid was distilled off after which a methacylic functional polymer (resin II) with the following properties: Mn= 1800, D= 2.0, weight per unsaturation (wpu)= 260 and a hydroxy value of 60 meq KOH per gram was obtained.

### Example III

### Curing of a coating comprising resin I

50 mg Darocure 1173™ was dissolved in 5 g resin I. A 100 µm thick film of this mixture was applied on a glass plate and subsequently cured under nitrogen with a total dose of 1 J/cm² (lamp: Fusion F600 equipped with a D-Bulb). After irradiation a cured coating was obtained. With the acetone double rub test the coating could withstand 100 acetone double rubs without being affected.

### Example IV

### Curing of a coating comprising resin I and laurylacrylate

5 g of resin I was dissolved in 2.4 g laurylacrylate to which 74 mg Irgacure 184™ were added. A 100 µm thick film of the resulting solution was applied on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

### Example V

### Curing of a coatings comprising resin II and methyl methacrylate

5 g of resin II was dissolved in 1.9 g methylmethacrylate to which 69 mg Irgacure 184™ was added. A 100 µm thick film was applied of the resulting solution on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

### Example VI

### Curing of a coating comprising resin II and isodecyl acrylate

5 g resin II was dissolved in 4.1 g isodecylacrylate to which 91 mg Irgacure 184™ was added. A 100 µm thick film of the resulting solution was applied on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

### Experiment VII

### Curing of a coating comprising resin II and triethylene glycol divinyl ether

5 g resin II was dissolved in 1.9 g triethylene glycol divinyl ether to which 69 mg Irgacure 184™ was added. A 100 µm thick film of the resulting solution was applied on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

### Example VIII

### Curing of a coating comprising resin II and triethylene glycol di( monobutyl maleate)

5 g of resin II was dissolved in 4.4g triethylene glycol di(monobutyl maleate) to which 94 mg Irgacure 184™ was added. A 100 µm thick film of the resulting solution was applied on a glass plate and subsequently cured under nitrogen with a total dose of 1 J/cm² (lamp: Fusion F600 equipped with a D-Bulb).

After irradiation a cured coating was obtained. With the acetone double rub test the coating could withstand 100 acetone double rubs without being affected.

These examples demonstrate that the UV-curable functional polymers according to the invention result in good coatings.

## Claims

1. A radiation curable coating composition comprising a polymer having formula (I): 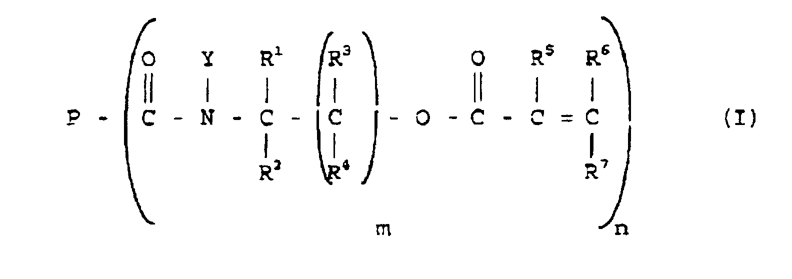 where:
P = a polymer group,
Y = hydrogen, an (C₁-C₈) alkyl group or a group of the formula 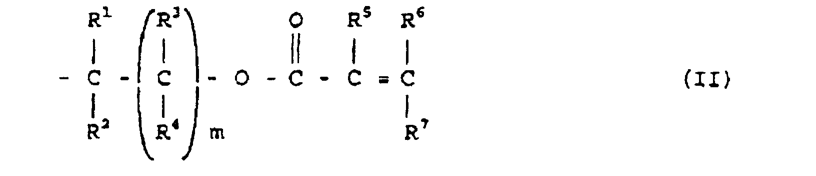 R¹, R², R³, R⁴ are, identical or different, hydrogen or a linear, branched or cyclic (C₁-C₈) alkyl chain,
R⁵= hydrogen, (C₁-C₅) alkyl, -CH₂OH or CH₂COOX,
R⁶, R⁷= hydrogen, (C₁-C₈) alkyl, or COOX,
X = hydrogen or (C₁-C₈) alkyl,
n = 1-100 and
m = 1-4.

2. A composition according to Claim 1, **characterized in that** Y is hydrogen or methyl, R¹, R², R³ and R⁴ are hydrogen or methyl, R⁵ is hydrogen or (m)ethyl and R⁶ and R⁷ are hydrogen.

3. A coating obtained by radiation curing of a composition according to any one of Claims 1-2.

4. An entirely or partly coated substrate wherein a coating according to Claim 3 is applied as the coating.

## Patentansprüche

1. Durch Strahlung härtbare Beschichtungszusammensetzung, umfassend ein Polymer mit der Formel (I): 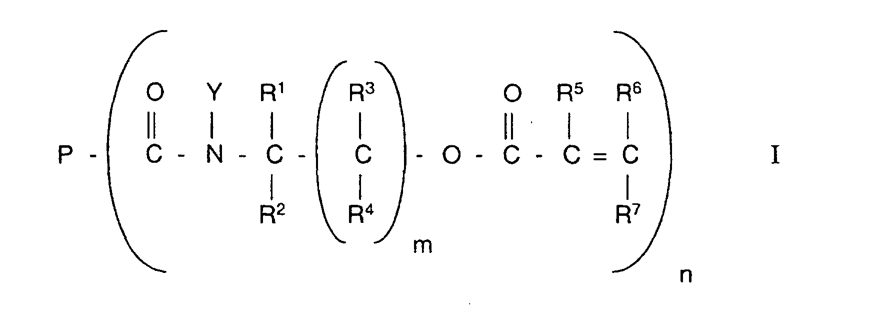 worin:
P = ein polymerer Rest
Y = Wasserstoff, ein (C₁ - C₈) Alkylrest oder eine Gruppe der Formel 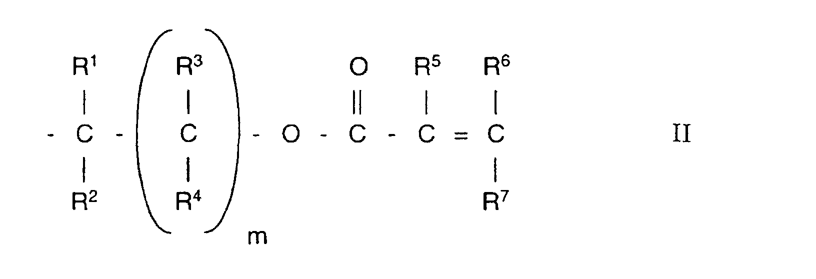 worin R¹, R², R³, R⁴ identisch oder voneinander verschieden Wasserstoff oder eine lineare, verzweigtkettige oder cyclische (C₁ - C₈) Alkylkette sind,
R⁵ = Wasserstoff, (C₁ - C₅)Alkyl , -CH₂OH oder CH₂COOX,
R⁶, R⁷ = Wasserstoff, (C₁ - C₈)Alkyl oder COOX,
X = Wasserstoff oder (C₁ - C₈) Alkyl,
n = 1-100 und
m = 1-4.

2. Zusammensetzung gemäß Anspruch 1, **dadurch gekennzeichnet, daß** Y Wasserstoff oder Methyl ist, R¹ R², R³ und R⁴ Wasserstoff oder Methyl sind, R⁵ Wasserstoff oder (M)ethyl ist und R⁶ und R⁷ Wasserstoff sind.

3. Beschichtung, erhalten durch Härten mit Strahlung einer Zusammensetzung gemäß einem der Ansprüche 1-2.

4. Vollständig oder teilweise beschichtetes Substrat, wobei eine Beschichtung gemäß Anspruch 3 als die Beschichtung aufgebracht ist.

## Revendications

1. Composition de revêtement durcissable par irradiation comprenant un polymère ayant la formule (I) : 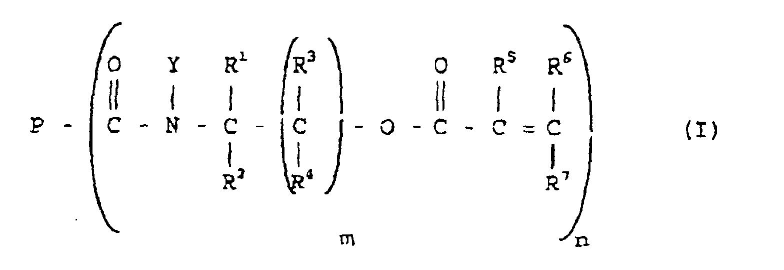 où :
P = un groupe polymère ;
Y = un atome d'hydrogène, un groupe alkyle en C₁ à C₈ ou un groupe de formule : 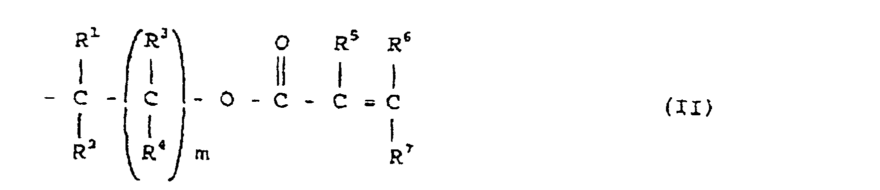 R¹, R², R³, R⁴ sont, identiques ou différents, un atome d'hydrogène ou une chaîne alkyle en C₁ à C₈ cyclique, ramifiée ou linéaire,
R⁵ = un atome d'hydrogène, un groupe alkyle en C₁ à C₅, - CH₂OH ou -CH₂COOX,
R⁶, R⁷ = un atome d'hydrogène, un groupe alkyle en C₁ à C₈ ou -COOX,
X = un atome d'hydrogène ou un groupe alkyle en C₁ à C₈,
n = 1 à 100, et
m = 1 à 4.

2. Composition selon la revendication 1, **caractérisée en ce que** Y représente un atome d'hydrogène ou un groupe méthyle, R¹, R², R³ et R⁴ représentent un atome d'hydrogène ou un groupe méthyle, R⁵ représente un atome d'hydrogène ou un groupe (m)éthyle et R⁶ et R⁷ représentent un atome d'hydrogène.

3. Revêtement obtenu par durcissement par irradiation d'une composition selon l'une quelconque des revendications 1 et 2.

4. Substrat entièrement ou partiellement revêtu dans lequel un revêtement selon la revendication 3 est appliqué en tant que revêtement.
